# EUROPEAN PATENT SPECIFICATION

(11) **EP 2 074 061 B1**
(45) Date of publication and mention of the grant of the patent: **19.08.2020**
(21) Application number: 07868350.5
(22) Date of filing: 02.10.2007
(51) Int. Cl.: C01B 33/149

(54) **SILICA-COATED METAL OXIDE SOLS HAVING VARIABLE METAL OXIDE TO SILICA RATION**
SILICA-BESCHICHTETE METALLOXIDSOLE MIT VERÄNDERLICHEM METALLXOXID/SILICA-VERHÄLTNIS
SOLS D'OXYDE MÉTALLIQUE ENROBÉS DE SILICE PRÉSENTANT UN RAPPORT OXYDE MÉTALLIQUE-SILICE VARIABLE

(30) Priority: 04.10.2006 US 538477
(43) Date of publication of application: 01.07.2009
(73) Proprietor: Nalco Company, Naperville, IL 60563-1198 (US)
(72) Inventor: ORTIZ, C. Yolanda, Bolingbrook, Illinois 60440 (US)
(74) Representative: Godemeyer Blum Lenze Patentanwälte Partnerschaft mbB - werkpatent
(86) International application number: PCT/US2007/080177
(87) International publication number: WO 2008/060768

(56) References cited:
- US-A- 4 708 945
- US-A- 5 352 277
- US-A1- 2005 234 136
- US-A1- 2005 234 136
- US-A1- 2006 175 295
- VEYTIZOU C ET AL: "Preparation of zircon bodies from amorphous precursor powder synthesized by sol-gel processing", JOURNAL OF THE EUROPEAN CERAMIC SOCIETY, ELSEVIER SCIENCE PUBLISHERS, BARKING, ESSEX, GB, vol. 22, no. 16, 1 December 2002 (2002-12-01), pages 2901-2909, XP004387509, ISSN: 0955-2219, DOI: 10.1016/S0955-2219(02)00038-9
- PEDRO TARTAJ: "Zircon Formation from Nanosized Powders Obtained by a Reverse Micelle Process", JOURNAL OF THE AMERICAN CERAMIC SOCIETY, vol. 88, no. 1, 1 January 2005 (2005-01-01), pages 222-224, XP55036014, ISSN: 0002-7820, DOI: 10.1111/j.1551-2916.2004.00021.x

## Description

### TECHNICAL FIELD

The invention relates generally to siliceous compositions as defined in claim 1. The invention has particular relevance to silica-coated metal oxide sols. Methods of producing such compositions are disclosed.

### BACKGROUND

The preparation and use of colloidal materials, such as colloidal silica, are generally known. For example, colloidal silica with a metal-coated surface is generally known and used. Typically, first the silica colloid is synthesized. The colloid is then coated with a metal oxide. During this procedure, both negatively and positively charged surfaces are obtained depending upon the properties of the metallic starting material and the coating method used.

Metal containing silica colloids are useful in a multitude of applications, such as chemical mechanical polishing agents in the electronics industry, specialty coating applications, and as support materials in catalytic processes. Despite this versatility, conventional-type silica colloids have several disadvantages. A limitation of present methods of preparing such metal-containing silica colloid is that the highest achievable metal oxide content is around thirty-five (35) weight percent metal oxide (such as in U.S. Pat. App. 2005-0234136 A1).

Typically, achievable metal oxide content for certain metals, such as cesium, zirconium, titanium, zinc, and iron is lower than that for aluminum. Current methods lead to increased ionic strength and conductivity of the silicic acid and cause gellation and precipitation at higher metal concentrations. As the metal is introduced onto the surface of the colloidal silica particle, the amount and type of metal component to be added to the silica particle is effectively limited by the surface area and morphology of the particle.

Moreover, conventional surface-treated silica sols are unstable at neutral pH (i.e., pH 6 to 8). As is apparent with aluminosilicate colloids, for example, aluminum species unbound or weakly bound to the colloidal particle surface typically hydrolyze under neutral pH conditions. This hydrolysis can result in either precipitation or coagulation of the particle coating material, which is particularly problematic for the electronics industry as the demand continues to rise for materials, such as chemical mechanical polishing slurries, which are stable at neutral pH.

A need therefore exists for improved siliceous colloidal compositions that have higher metal loads. A need correspondingly exists for an efficient and cost-effective method of producing such compositions.

### SUMMARY

Accordingly, this invention provides a novel metal-rich siliceous composition according to claim 1. The composition includes a metal-rich siliceous material including a metal oxide dispersion having one or more metal oxides and one or more colloidal silica particles. At least a portion of the metal oxide dispersion is coated with a layer of siliceous material. The composition has a controllable metal oxide to silica ratio with metal oxide content from 0.01 weight percent to 99.99 weight percent (i.e., 0.01:99.99 to 99.99:0.01 metal oxide to silica ratio), based on silica.

In an aspect, the disclosure provides a method of controlling a metal oxide to silica ratio within a metal-rich siliceous material. The method includes preparing a silicic acid, a metal oxide dispersion, and a basic heel solution. Mixing a known proportion of the silicic acid and the metal oxide dispersion forms a blend. Subsequently, combining the blend and the basic heel solution forms one or more colloidal silica-coated metal oxide particles. Adjusting the metal oxide to silica ratio in the colloidal silica-coated metal oxide particles is dependent upon the known proportion, among other factors as explained below. Optionally, the composition may be processed further by ultra-filtration, deionization, heating, surface functionalization, or any other suitable process.

It is an advantage of the invention to provide a metal-rich siliceous material useful in a variety of areas, such as dental applications, protein separation processes, molecular sieves, nanoporous membranes, wave guides, photonic crystals, refractory applications, clarification of wines and juices, chemical mechanical planarization of semiconductor and disk drive components, catalyst supports, retention and drainage aids in papermaking, fillers, surface coatings, ceramic materials, investment casting binders, flattening agents, proppants, cosmetic formulations, polishing abrasives, and the like.

It is another advantage of the invention to provide a stable metal oxide sol including colloidal silica-coated metal oxide particles.

It is a further advantage of the invention to provide a colloidal silica composition including from about 0.01 weight percent to about 99.99 weight percent metal oxide based on silica.

It is another advantage of the invention to provide a colloidal silica-coated metal oxide composition having a highly variable and controllable metal oxide content and a method of making the composition.

It is still a further advantage of the disclosure to provide a method that allows preparing metal oxide sols having comprehensive range of metal oxide to silica ratios.

It is yet another advantage of the disclosure to provide a method that allows preparing metal oxide sols having a variable and controllable surface morphology, surface area, and porosity based on reaction conditions and the type of metal oxide(s) used.

Another advantage of the invention is to provide a stable colloidal silica-coated metal oxide dispersion having surface characteristics amenable to functionalization or other modification of the silica surface.

### DETAILED DESCRIPTION

As used herein, the terms "colloid" and other like terms including "colloidal," "sol," "acid sol," and the like refer to a two-phase system having a dispersed phase and a continuous phase. The colloids of the invention have a solid phase dispersed or suspended in a continuous or substantially continuous liquid phase, typically an aqueous solution. Thus, the terms "colloid" or "colloidal composition" encompasses both phases, whereas the terms "colloidal particles" or "particles" refer to the dispersed or solid phase.

The invention provides a metal-rich siliceous composition according to claim 1. The siliceous composition includes a metal oxide dispersion having one or more metal oxides and one or more colloidal silica particles. In an embodiment, the metal is dispersed in a controlled manner within the colloidal silica particles. In another embodiment, at least a portion of the metal oxide dispersion is coated with at least a portion of the colloidal silica particles.

In an embodiment, the invention provides a colloidal composition including a metal oxide dispersion that is at least partially or fully coated with at least one layer of a siliceous material. It is contemplated that the siliceous material may include monomers, such as [Si(OH)₄]₈, one or more colloidal silica particles being made up of silicic acid monomers having a general molecular formula of [SiO_{X}(OH)_{4-2X}]_{N} (where X is from 0 to about 4 and N is from 1 to about 16), such as [Si(OH)₄]₈, the like, and combinations thereof. In an embodiment, the colloidal silica particles include nanoparticles having a diameter from about 2 nanometers to about 1000 nanometers. In a preferred embodiment, the nanoparticles have a diameter from about 4 nanometers to about 250 nanometers.

In another embodiment, the siliceous material includes one or more colloidal silica particles having an inner volume wherein at least a portion of the metal oxide dispersion resides completely within the inner volume. That is, the colloidal silica particles comprise a "shell" with a metal oxide "core." In alternative embodiments, the colloidal particles may be spherical, amorphous, or have any other suitable shape. Alternatively, the metal oxide dispersion is partially coated with one or more layers of the siliceous material. Surface functionalization of pure metal oxides is very difficult. The shell/core design of this embodiment and the reactivity of the silica provide surface morphology characteristics that are amenable to functionalization. In alternative embodiments, the shell need not completely cover the metal oxide (i.e., partial coating of siliceous material on the metal oxide is sufficient) to enhance surface functionalization capacity.

Further, the metal oxide sol may be used in certain coating applications. For example, a metal part may be coated with the metal oxide sol and then heated to form a layer of refractory material on the part. The refractivity may be adjusted by, for instance, choosing different metal oxides. In this example, 3:1 Al₂O₄:SiO₂ may be used to coat the metal part. Heating converts this coating into mullite or Al₆SiO₂, which provides, for instance, high temperature stability, thermal shock resistance, a low coefficient of thermal expansion, and resistance to many corrosive environments.

It should be appreciated that the colloidal composition may include a variety of further metal oxides. In an embodiment, the metal oxide dispersion includes only one species of metal oxide as mentioned in claim 1. Alternatively, the metal oxide dispersion includes a plurality of different metal oxides. Representative metal oxides include aluminum oxide, aluminum oxide hydroxide, boehmite crystals, or oxides of cesium, titanium, zirconium, iron, strontium, zinc, cerium, nickel, molybdenum, boron, rhenium, vanadium, copper, the like, and combinations thereof.

The disclosure also provides a method of controlling a silica to metal ratio within a metal-rich siliceous material. The synthesis procedure used to implement this method enables controlling a comprehensive range of metal oxide to silica ratios in the metal-rich siliceous material. In a preferred embodiment, siliceous colloidal particles include from about 0.01 percent to about 99.99 percent metal oxide (i.e., about 0.01:99.99 to about 99.99:0.01 metal oxide to silica ratio), based on silica. More preferably, the particles include 0.1 percent to about 99.9 percent metal oxide (i.e., about 0.1:99.9 to about 99.9:0.1 metal oxide to silica ratio), based on silica. Combining various types and concentrations of metal oxides with known types and concentrations of siliceous material yields a highly controllable and variable metal to silica ratio, as shown in the examples below.

The method includes preparing a silicic acid. It is contemplated that the silicic acid may be prepared using any suitable method. A representative method includes deionizing a sodium silicate, such as sodium orthosilicate (Na₄SiO₄), sodium metasilicate (Na₂SiO₃), sodium polysilicate (Na₂SiO₃)_{n,} sodium pyrosilicate Na₆Si₂O₇, the like, an any combination thereof with an ion exchange resin. Preferably, the sodium silicate is deionized with a strong acid ion exchange resin to produce the silicic acid or acid sol. An alternative method includes using the well-known Stöber process to produce the silicic acid. The preferred method is deionization.

The method includes preparing a metal oxide dispersion. The metal oxide dispersion may include a variety of different metals, as described in more detail herein. The metal oxide dispersion is prepared using any suitable method. A preferred method is to prepare an acidulated solution using a suitable acid, such as nitric acid, and adding to the solution an effective amount of a metal oxide. For example, to prepare a 10 percent dispersion of Al₂O₃, 12.5 grams of boehmite would be added to a nitric acid solution having a pH from about 3 to about 4. Further detailed examples are provided below.

The type and amount (in relation to silica) of metal oxide chosen determines several factors of the colloidal silica-coated metal oxide including surface porosity, surface area, and composition. It is contemplated (and exemplified in the examples below) that controlling these factors and the metal oxide to silica ratio in the metal oxide sol throughout a comprehensive range is possible.

The method includes preparing a basic heel solution typically in the range from about 10 milliequivalents ("meq") to about 200 meq. This heel solution acts as a catalyst for forming the colloidal silica-coated metal oxide particles and can alternatively include various types of bases. Representative bases include sodium hydroxide, lithium hydroxide, potassium hydroxide, ammonium hydroxide, primary amines, secondary amines, tertiary amines, quaternary amines, quaternary compounds, the like, and combinations thereof. Representative quaternary compounds include tetraethyl ammonium hydroxide, tetra-n-butyl ammonium hydroxide, tetra-n-propyl ammonium hydroxide, tetramethyl ammonium hydroxide, NNN-trimethyl-2-butyl ammonium hydroxide, NNN-trimethyl-propyl ammonium hydroxide, the like, and combinations thereof.

The method includes mixing a known proportion of the silicic acid and the metal oxide dispersion to form a blend. Such mixing may include adjusting the reaction conditions, such as temperature, time, agitation, and/or stirring. Detailed examples of such conditions are provided below. This mixing step is performed prior to introducing the silicic acid or the metal oxide dispersion to the basic heel solution. This order, allows a higher degree of control over the metal oxide to silica ratio in the metal-rich siliceous colloidal particles.

The method includes combining the silicic acid and metal oxide dispersion blend with the basic heel solution. Such combining forms one or more silica-coated metal oxide particles with a highly controllable metal oxide content ranging from about 0.01 percent to about 99.99 percent, based on silica. The metal oxide to silica ratio of the particles is dependent upon factors such as silicic acid type and concentration, metal oxide type and concentration, rate of mixing the silicic acid and the metal oxide to form a blend, rate of combining the blend with the heel solution, temperature, time, pH, stirring, and other reaction conditions. This includes determining and adjusting such reaction conditions to yield the desired metal oxide to silica ratio. Other colloidal particle properties, such as surface area and porosity, are likewise affected by such conditions. Detailed examples of representative reaction conditions are provided below.

The method includes optionally further processing the colloidal silica-coated metal oxide composition. It is contemplated that further processing, such as heating, ultra-filtration, deionization, surface functionalization, combining with other compositions, the like, and combinations thereof may be used. Such surface modifications provide a means to further determine and adjust the metal oxide sol properties, such as thermal stability, expansion, and contraction; refractivity; reactivity; and the like.

### EXAMPLES

The foregoing may be better understood by reference to the following examples, which are intended to be illustrative and are not intended to limit the scope of the invention.

### Example I

A 10 weight percent Al₂O₃ dispersion was prepared by adding a few drops of concentrated nitric acid to 75 ml of deionized water to bring the pH of the water to between 3 and 4. 12.5 grams of aluminum oxide-hydroxide (sometimes referred to as boehmite and available from Sasol, Johannesburg, South Africa, under the tradename "Dispal 23N4-80") was then slowly added to the acidulated water to produce the dispersion. More deionized water was added to bring the final volume of the dispersion to 100 ml.

Sodium silicate was deionized with a strong acid ion exchange resin to produce silicic acid or acid sol. Both the dispersion and the silicic acid are naturally acidic and are compatibly mixed in any ratio. In this example, the Al₂O₃ dispersion was combined with the silicic acid at various concentrations, as illustrated in Table 1. Upon mixing, the resulting pH was acidic and is listed as "Initial pH" in Table 1. The pH of the mixes was adjusted to be from about 9 to about 10 to enhance stability of the metal-rich silica colloid by adding 0.1 N NaOH to achieve the "Stable pH." Table 1 indicates the resulting pH at which greatest stability was achieved. All samples remained stable for at least several months.

**TABLE I**

| Al₂O₃ wt % | SiO₂ wt % | Initial pH | meq NaOH added | Stable pH |
|---|---|---|---|---|
| 0 | 100 | 2.96 | 9 | 9.44 |
| 10 | 90 | 2.95 | 9 | 9.79 |
| 25 | 75 | 2.86 | 6 | 9.43 |
| 50 | 50 | 2.84 | 5 | 9.52 |
| 60 | 40 | 2.85 | 5 | 9.86 |
| 70 | 30 | 2.86 | 3 | 9.28 |
| 80 | 20 | 2.88 | 2 | 8.83 |
| 90 | 10 | 2.94 | 2 | 9.31 |
| 100 | 0 | 3.71 | 2 | 9.50 |

### Example II

A typical synthesis for 5 weight percent Al₂O₃ and 95 weight percent SiO₂ includes preparing an acid sol (specific gravity of 1.0436 g/ml and 7.15 weight percent SiO₂) by deionizing 3717 grams of sodium silicate and preparing a 10 weight percent alumina dispersion (Dispal 23N4-80) with 139.8 grams of Al₂O₃, as above. The acid sol and the alumina dispersion were mixed with constant stirring on ice (i.e., about 0°C) to form a blend. The blend was then added to a heel containing 200 ml of deionized water and 50 meq NaOH over the course of three hours at 80°C. The temperature was held at 80°C for an additional one hour after addition was complete. The silica-coated aluminum oxide colloid was further processed via ultrafiltration. Properties of the colloidal silica-coated aluminum oxide particles are illustrated in Table II.

**Table II**

| | |
|---|---|
| pH | 8.61 |
| Conductance | 2560 µS |
| Specific gravity | 1.1830 g/ml |
| QELS | 89.7 nm |
| Polydispersity | 0.579 |
| Total solids | 26.02 % |

### Example III

A typical synthesis for 28 weight percent Al₂O₃ and 72 weight percent SiO₂ includes deionizing 1630 grams of sodium silicate (specific gravity of 1.038 g/ml and 6.23 wt % SiO₂) to form acid sol and preparing a 10 weight percent alumina dispersion with 360 grams of alumina (Catapal 200, available from available from Sasol, Johannesburg, South Africa), as above. The acid sol and the alumina dispersion were mixed with constant stirring on ice (i.e., about 0°C) to form a blend. The blend was then added to a heel containing 300 ml of deionized water and 10 grams of AMP-95® (2-amino-2-methyl-1-propanol with 5 percent water: available from The Dow Chemical Company®), Midland, MI) over the course of three hours at 70°C. The temperature was held at 70°C for an additional one hour after addition was complete. The silica-coated aluminum oxide colloid was further processed via ultrafiltration. Properties of the final colloidal silica-coated aluminum oxide particles are illustrated in Table III.

**Table III**

| | |
|---|---|
| pH | 9.35 |
| Conductance | 907 µS |
| QELS | 272 nm |
| Total solids | 13.4 % |

### Example IV

A typical synthesis for 85 weight percent Al₂O₃ and 15 weight percent SiO₂ includes deionizing 143 grams of sodium silicate (specific gravity of 1.038 g/ml and 6.23 weight percent SiO₂) to form an acid sol and preparing a 12.66 weight percent alumina dispersion with 399 grams of alumina (Dispal 14N4-80, available from Sasol, Johannesburg, South Africa), as above. The acid sol and the alumina dispersion were mixed with constant stirring on ice (i.e., about 0°C) to form a blend. The blend was then added to a heel containing 200 ml of deionized water and 2 grams of AMP-95® over the course of three hours at 57°C. The temperature was held at 57°C for an additional two hours after addition was complete. The silica-coated aluminum oxide colloid was further processed via ultrafiltration. The properties of the colloidal silica-coated aluminum oxide are illustrated in Table IV.

**Table IV**

| | |
|---|---|
| pH | 9.85 |
| Conductance | 698 µS |
| QELS | 204 nm |
| Total solids | 23.8 % |

### Example V

A typical synthesis for 79 weight percent Al₂O₃ and 21 weight percent SiO₂ includes preparing a 10 weight percent alumina dispersion with 581 grams of alumina (Dispal 14N4-80, available from Sasol, Johannesburg, South Africa), as above. An acid sol comprising 150 grams of 6.85 weight percent silicic acid and the alumina dispersion were mixed with constant stirring on ice (i.e., about 0°C) fro about 3 hours to form a blend. To the blend was added 23 grams of tetramethyl ammonium hydroxide. The silica-coated aluminum oxide colloid was further processed via ultrafiltration. The properties of the colloidal silica-coated aluminum oxide are illustrated in Table V.

**Table V**

| | |
|---|---|
| pH | 10.9 |
| Conductance | 2620 mS |
| QELS | 87 nm |
| Total solids | 16.8% |

### Example VI

A typical synthesis for 50 weight percent ZrO₂ and 50 weight percent SiO₂ includes deionizing 111 grams of sodium silicate (specific gravity of 1.044 g/ml and 7.7 weight percent SiO₂) to form an acid sol and preparing a 10 weight percent zirconia dispersion with 620 grams of fumed zirconia (available from Degussa Corporation®, Parsippany, NJ), as above. The acid sol and zirconia dispersion were mixed with constant stirring on ice (i.e., about 0°C) to produce a blend. The blend was then added to a heel containing 300 ml of deionized water and 50 meq NaOH over the course of three hours at 70°C. The temperature was held at 70°C for an additional one hour after addition was complete. The silica-coated aluminum oxide colloid was further processed via ultrafiltration. The final colloidal silica-coated zirconium oxide properties are illustrated in Table VI.

**Table VI**

| | |
|---|---|
| pH | 9.33 |
| Conductance | 2050 µS |
| QELS | 207 nm |
| Total solids | 20.4 % |

### Example VII

Table VII indicates zeta potentials measured for various Al₂O₃ to SiO₂ ratios. These measurements confirm that the alumina is actually coated with a layer of silica.

**Table VII**

| Al₂O₃ wt % | Zeta (mV) |
|---|---|
| 60 | -6.523 |
| 70 | -6.022 |
| 80 | -5.237 |
| 90 | -3.508 |
| 100 | 2.536 |

### Example VIII

Table VIII illustrates several variations of Al₂O₃ to SiO₂ ratios. Column one gives the intended final aluminum oxide concentration. Column two illustrates the various bases that can be used to obtain the silica-coated metal oxides of the invention. Column six gives the actual final aluminum oxide concentration as measured by X-Ray Fluorescence Spectroscopy ("XRF"). Column seven provides the surface area as obtained by surface titration using the Sears method. This method is affected by the presence of alumina and thus gives artificially high numbers. Column eight lists the surface area as measured by the BET method, which is unaffected by composition and shows consistently lower surface area figures. The porosity values in columns nine and ten vary with alumina crystal and silica packing differences.

**Table VIII**

| % Al₂O₃ | Base | pH | % Solids | Sp. Gr. | % Al₂O₃ | Surf. area (m²/g) | BET (m²/g) | Pore vol (cc/g) | Pore diam (Å) |
|---|---|---|---|---|---|---|---|---|---|
| 50.00 | AMP95 | 9.14 | 26.60 | 1.1878 | 54.76 | 419 | 326 | 0.883 | 108.30 |
| 50.00 | NaOH | 8.21 | 26.36 | 1.2197 | 48.86 | 333 | 294 | 0.720 | 97.86 |
| 50.00 | AMP95 | 9.55 | 13.46 | 1.1053 | 48.10 | 548 | 485 | 0.927 | 76.40 |
| 10.00 | AMP95 | 9.85 | 10.86 | 1.0763 | 13.41 | 1100 | 770 | 0.574 | 29.88 |
| 10.00 | NH₄OH | 10.46 | 26.01 | 1.2078 | 21.42 | 650 | 462 | 0.632 | 54.70 |
| 50.00 | AMP95 | 10.25 | 22.44 | 1.1920 | 57.31 | 450 | 380 | 0.818 | 86.19 |
| 50.00 | NH₄OH | 9.25 | 18.20 | 1.1465 | 50.60 | 351 | 312 | 0.632 | 81.12 |

## Claims

1. A metal-rich siliceous composition comprising a metal oxide dispersion including one or more metal oxides, a siliceous material including one or more colloidal silica particles, wherein at least a portion of the metal oxide dispersion is coated with the siliceous material, wherein the metal oxide dispersion includes aluminum oxide or fumed zirconia, and wherein the metal oxide dispersion is from 0.01 weight percent to 99.99 weight percent based on silica.

2. The metal-rich siliceous composition of claim 1, wherein at least a portion of the metal oxide dispersion is coated with one or more colloidal silica particles.

3. The metal-rich siliceous composition of claim 1, wherein at least a portion of the metal oxide dispersion is fully coated with at least one layer of the siliceous material.

4. The metal-rich siliceous composition of claim 1, wherein at least a portion of the metal oxide dispersion is fully coated with at least one layer of the colloidal silica particles.

5. The metal-rich siliceous composition of claim 1, wherein the metal oxide dispersion includes a plurality of different metal oxides.

6. The metal-rich siliceous composition of claim 1, wherein the siliceous material includes silicic acid monomers having a molecular formula of [SiO(OH)₄]₈.

7. The metal-rich siliceous composition of claim 1, wherein the metal oxide dispersion includes a metal selected from the group consisting of: an alkali metal, an alkaline earth metal, a first row transition metal, a second row transition metal, a lanthanide, and combinations thereof.

8. Use of a material comprising the metal-rich siliceous composition of claim 1, in an industrial application wherein the industrial application is selected from the group consisting of: dental applications, protein separation processes, molecular sieves, nanoporous membranes, wave guides, photonic crystals, refractory applications, clarification of wines and juices, chemical mechanical planarization of semiconductor and disk drive components, catalyst supports, retention and drainage aids in papermaking, fillers, surface coatings, ceramic materials, investment casting binders, flattening agents, proppants, cosmetic formulations, and polishing abrasives.

## Patentansprüche

1. Metallreiche siliciumdioxidhaltige Zusammensetzung, umfassend eine Metalloxiddispersion einschließlich eines oder mehrerer Metalloxide, ein siliciumdioxidhaltiges Material einschließlich eines oder mehrerer kolloidaler Siliciumdioxidteilchen, wobei wenigstens ein Anteil der Metalloxiddispersion mit dem siliciumdioxidhaltigen Material beschichtet ist, wobei die Metalloxiddispersion Aluminiumoxid oder abgerauchtes Zirconiumdioxid einschließt, und wobei die Metalloxiddispersion von 0,01 Gew.-% bis 99,99 Gew.-%, basierend auf Siliciumdioxid, beträgt.

2. Metallreiche siliciumdioxidhaltige Zusammensetzung nach Anspruch 1, wobei wenigstens ein Anteil der Metalloxiddispersion mit einem oder mehreren kolloidalen Siliciumdioxidteilchen beschichtet ist.

3. Metallreiche siliciumdioxidhaltige Zusammensetzung nach Anspruch 1, wobei wenigstens ein Anteil der Metalloxiddispersion vollständig mit wenigstens einer Schicht des siliciumdioxidhaltigen Materials beschichtet ist.

4. Metallreiche siliciumdioxidhaltige Zusammensetzung nach Anspruch 1, wobei wenigstens ein Anteil der Metalloxiddispersion vollständig mit wenigstens einer Schicht der kolloidalen Siliciumdioxidteilchen beschichtet ist.

5. Metallreiche siliciumdioxidhaltige Zusammensetzung nach Anspruch 1, wobei die Metalloxiddispersion mehrere verschiedene Metalloxide einschließt.

6. Metallreiche siliciumdioxidhaltige Zusammensetzung nach Anspruch 1, wobei das siliciumdioxidhaltige Material Kieselsäuremonomere, die eine Molekularformel von [SiO(OH)₄]₈ aufweisen, einschließt.

7. Metallreiche siliciumdioxidhaltige Zusammensetzung nach Anspruch 1, wobei die Metalloxiddispersion ein Metall einschließt, das aus der Gruppe ausgewählt ist, die aus Folgendem besteht:
einem Alkalimetall, einem Erdalkalimetall, einem Übergangsmetall der ersten Reihe, einem Übergangsmetall der zweiten Reihe, einem Lanthanoid und Kombinationen davon.

8. Verwendung eines Materials, umfassend die metallreiche siliciumdioxidhaltige Zusammensetzung nach Anspruch 1 in einer industriellen Anwendung, wobei die industrielle Anwendung aus der Gruppe ausgewählt ist, die aus Folgendem besteht:
Dentalanwendungen, Proteintrennvorgängen, Molekularsieben, nanoporösen Membranen, Wellenleitern, photonischen Kristallen, feuerfesten Anwendungen, Klärung von Weinen und Säften, chemisch-mechanischer Planarisierung von Halbleiter- und Plattenlaufwerkskomponenten, Katalysatorträgern, Retentions- und Drainagehilfen bei der Papierherstellung, Füllstoffen, Oberflächenbeschichtungen, Keramikmaterialien, Feingussbindemitteln, Glättungsmitteln, Stützmitteln, kosmetischen Formulierungen und Polierschleifmitteln.

## Revendications

1. Composition siliceuse riche en métal, comprenant une dispersion d'oxyde métallique comportant un ou plusieurs oxydes métalliques, un matériau siliceux comportant une ou plusieurs particules de silice colloïdale, au moins une partie de la dispersion d'oxyde métallique étant revêtue du matériau siliceux, la dispersion d'oxyde métallique comportant de l'oxyde d'aluminium ou de la zircone sublimée, et la dispersion d'oxyde métallique étant de 0,01 pourcent en poids à 99,99 pourcent en poids sur la base de la silice.

2. Composition siliceuse riche en métal selon la revendication 1, dans laquelle au moins une partie de la dispersion d'oxyde métallique est revêtue d'une ou plusieurs particules de silice colloïdale.

3. Composition siliceuse riche en métal selon la revendication 1, dans laquelle au moins une partie de la dispersion d'oxyde métallique est entièrement revêtue d'au moins une couche du matériau siliceux.

4. Composition siliceuse riche en métal selon la revendication 1, dans laquelle au moins une partie de la dispersion d'oxyde métallique est entièrement revêtue d'au moins une couche des particules de silice colloïdale.

5. Composition siliceuse riche en métal selon la revendication 1, dans laquelle la dispersion d'oxyde métallique comporte une pluralité de différents oxydes métalliques.

6. Composition siliceuse riche en métal selon la revendication 1, dans laquelle le matériau siliceux comporte des monomères d'acide silicique ayant une formule moléculaire de [SiO(OH)₄]₈.

7. Composition siliceuse riche en métal selon la revendication 1, dans laquelle la dispersion d'oxyde métallique comporte un métal choisi dans le groupe constitué de : métal alcalin, métal alcalino-terreux, métal de transition de première rangée, métal de transition de seconde rangée, lanthanide et leurs combinaisons.

8. Utilisation d'un matériau comprenant la composition siliceuse riche en métal selon la revendication 1, dans une application industrielle, l'application industrielle étant choisie dans le groupe constitué : d'applications dentaires, de processus de séparation de protéines, de tamis moléculaires, de membranes nanoporeuses, de guides d'ondes, de cristaux photoniques, d'applications réfractaires, de clarification de vins et de jus, de planarisation mécano-chimique de composants de semi-conducteurs et de commande à disques, de supports de catalyseurs, d'aides à la rétention et au drainage dans la fabrication de papier, de charges, de revêtements de surface, de matériaux céramiques, de liants pour le moulage de précision, d'agents d'aplatissement, d'agents de soutènement, de formulations cosmétiques et d'abrasifs de polissage.
